# EUROPEAN PATENT SPECIFICATION

(11) **EP 0 852 546 B1**
(45) Date of publication and mention of the grant of the patent: **01.08.2001**
(21) Application number: 96932900.2
(22) Date of filing: 09.09.1996
(51) Int. Cl.: B60R 9/04

(54) **A DEVICE FOR VEHICLE-MOUNTED LOAD-CARRIERS**
VORRICHTUNG FÜR EINEN AUF EINEM FAHRZEUG MONTIERTEN LASTTRÄGER
DISPOSITIF CONCU POUR DES BARRES DE SUPPORT DE CHARGE MONTEES SUR UN VEHICULE

(30) Priority: 26.09.1995 SE 9503317
(43) Date of publication of application: 15.07.1998
(73) Proprietor: Mont Blanc Industri AB, 516 90 Dalsjöfors (SE)
(72) Inventor: MANN, Gerhard, S-523 00 Ulricehamn (SE)
(74) Representative: Lindberg, Klas Valter Bo
(86) International application number: SE9601117
(87) International publication number: WO9711864

(56) References cited:
- EP-A- 0 487 132
- EP-A- 0 503 305
- WO-A-89/04775

## Description

The present invention relates to a device for vehicle-mounted load-carriers, comprising support feet carrying said load-carriers on top of a vehicle structure and being of the kind wherein each support foot comprises an actuacting means, the actuating force of which causes the support foot to be clamped simultaneously to the vehicle structure and to the load-carrier said actuation means being a traction means acting between two clamping jaws arranged to move towards one another and thus to exert a clamping force against opposite sides of an integral element of the vehicle structure.

A device of this kind is known for instance from EP 0 503 305. This prior-art device comprises two jaws between which a vehicle structure may be clamped by tightening a screw.

The main object of the invention is to provide a device of the kind defined above, which has a low building height, simple function, comprises a reduced number of components, is simple to use and advantageously is applicable for fastening load-carriers, for instance on roof-mounted racks or rails that form part of the vehicle structure.

This object is achieved in a device of the above-mentioned kind wherein the actuating means is a traction means acting between two clamping jaws arranged to move towards one another and thus to exert a clamping force against opposite sides of an integral element of the vehicle structure, one of said clamping jaws being formed with a slide face forming an acute angle with a neighbouring part of the load-carrier, a clamping block resting on said slide face for displacement thereon, the force of said traction means being exerted on said clamping block at an oblique angle relatively to the slide plane in order to, upon tightening of the clamping jaws about said part of the vehicle carrying structure, at the same time cause said clamping block to be displaced along said slide face, into abutment against the load-carrier.

Further particularities and details will appear from the appended claims.

One embodiment of the inventive object will be described in closer detail in the following the reference to the accompanying drawings, wherein:
Fig. 1 is a sectional view illustrating a load-carrier fastened to a part of the structure of a vehicle by means of the device in accordance with the invention, the section being taken along line I-I of Fig. 4,
Fig. 2 is a corresponding sectional view along line II-II of Fig. 4,
Fig. 3 is a sectional view corresponding to Fig. 1, the section showing the device in its open, i.e. untightened condition,
Fig. 4 is an end view as seen from the left according to Figs 1 and 2 of the same device, the end closing means for the load-carrier tubular member having been removed,
Fig. 5 is a lateral view of the device in the position according to Fig. 1,
Fig. 6 is a lateral view of the device showing the latter in the position of Fig. 3,
Fig. 7 is a sectional view along line VII-VII of Fig. 5, and
Fig. 8 is a sectional view along line VIII-VIII of Fig. 5.

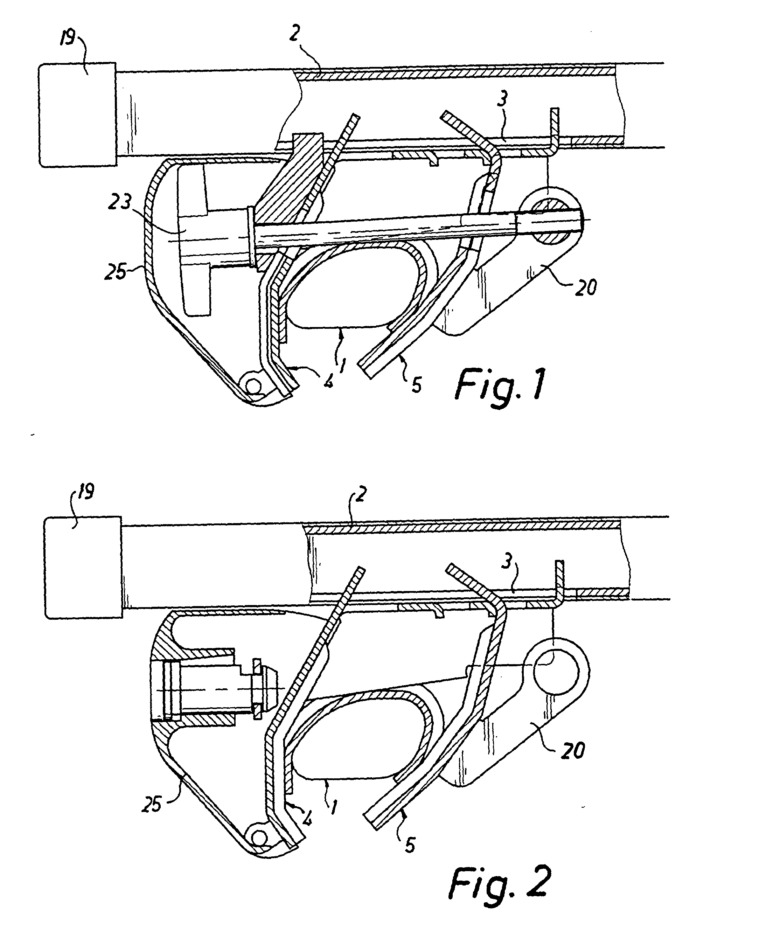

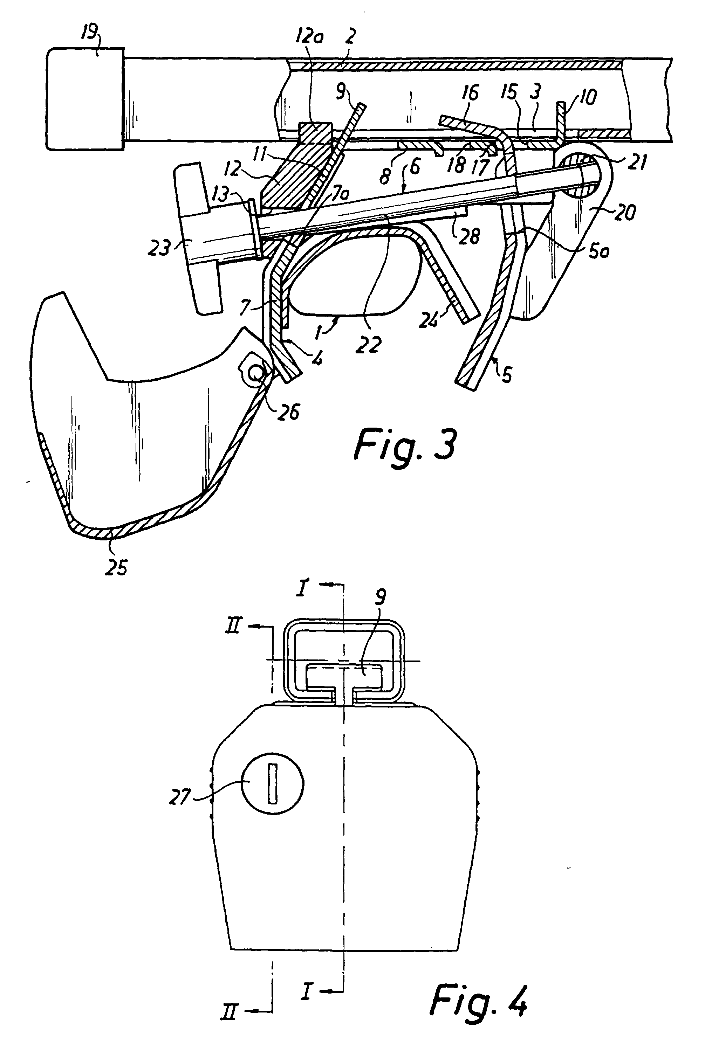

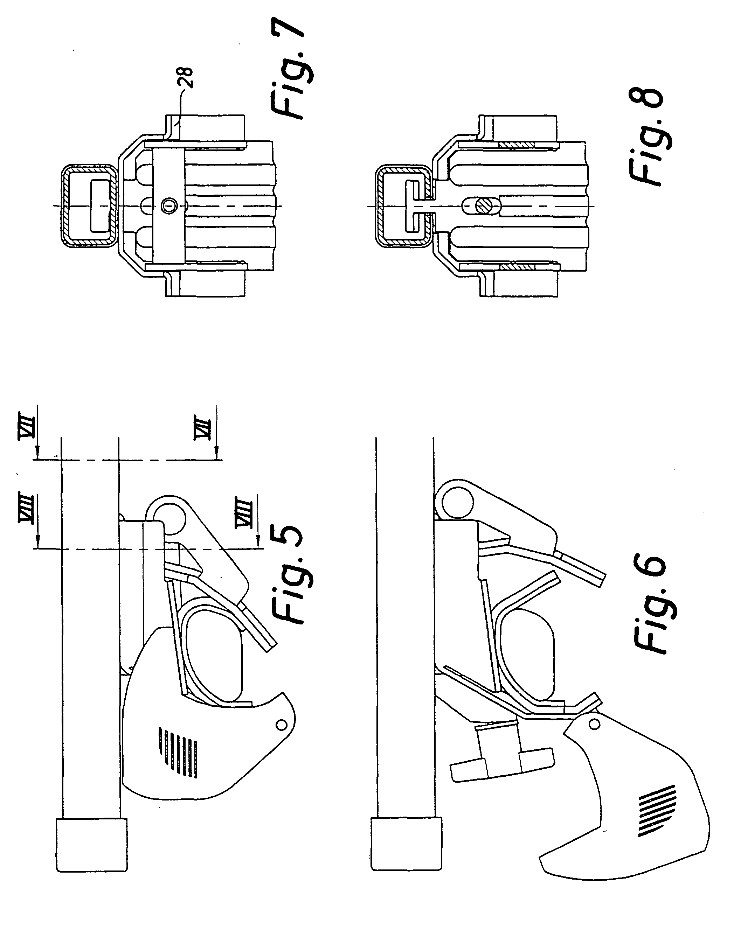

Numeral reference 1 designates in the drawing figures a component forming part of the vehicle structure and preferably being a roof-rack rail mounted on the vehicle. Although the device to be described below primarily is intended to be used together with vehicles having a roof-rack rail, the description is not to be understood to limit the device to precisely this type of structure. Numeral reference 2 designates a load-carrier extending transversally across the vehicle, i.e. transversally with respect to the roof-rack rails, the illustrated embodiment of the load-carrier being configured as a square-section member having a slit 3 extending along its bottom face. Preferably, the slit 3 is open at the end of the tube 2. Numeral reference 4 designates generally a first clamping jaw and numeral reference 5 designates generally a second clamping jaw, wheras an actuating means acting between the clamping jaws is designated generally by numeral 6. The clamping jaw 4 comprises a leg portion 7 with an aperture 7a therein through which the actuating means 6 projects, and a support 8 resting against the lower face of the tube 2. From leg portion 7 extends a projection 9, through the slit 3 into the tube interior. In the interior of tube 2 the projection 9 has a wider extension, as most clearly apparent from Figs 4, 7 and 8. Owing to this arrangement, the projection is in gripping engagement with the slit edges in the interior cavity of the tube, thus preventing the clamping jaw 4 from being dislodged from the carrier tube 2. Numeral reference 10 designates a further projection formed on the support 8, which projection likewise extends into the interior of the tube 2 in the same manner as projection 9. Like the clamping leg 5 the clamping jaw 4 consists of a sheet metal plate having stiffening ribs thereon, and the leg portion 7 is bent relatively to the support 8 in such a manner that on the outer face thereof a slide face 11 is formed, for sliding contact with a clamping block 12. The clamping block 12 is formed with a hole 13 therein, through which the actuating means 6 extends. One portion 12a of the clamping block 12 projects up through the slit 3 in the load-carrier tube 3, the latter thus forming a guide for lateral guidance of the clamping block. Also the clamping jaw 5 is formed with a hole 5a to accomodate the actuating means 6, and in addition this jaw is formed with a projection 16 extending through an opening 15 formed in the support 8 and the slit 3 in the load-carrier rod, said projection being bent across a bar-shaped part 17 on the support. The support 8 is formed with a further opening 18, through which the projection 16 may be alternatively inserted, should so be required for adaptation to different dimensions of the part of the vehicle structure onto which the load-carrier is to be fastened. Owing to the two projections 9 and 10 on the support 8 of the clamping jaw 4 the support foot, formed by the two clamping jaws and the actuating means, is unlosably secured to the load-carrier rod, once the support foot has been fitted to the latter. In accordance with the embodiment shown, the support foot is fitted to the load-carrier rod from the rod end prior to application of the rod end closure member 19. Numeral reference 20 designates brackets provided at the rear of the clamping jaw 5, a pivot pin 21 passing through the brackets and formed with transverse threads in screw engagement with the spindle 22 forming part of the actuating means. Numeral reference 23 designates a hand wheel mounted on the spindle 22 and in abutment against the clamping block 12 for actuation thereof. Numeral reference 24 designates a flexible protection member, preferably made from rubber or soft plastics and intended to prevent the clamping jaws from indenting the support structure 1, the latter often being enamelled and consequently easily scratched. Numeral reference 25 designates a protective hood which is hingedly connected to the clamping jaw 4 by means of a pivot connection 26 and arranged to be pivoted between the open position illustrated in Fig. 3 and the closed position illustrated in Fig. 1. Numeral reference 27 designates a lock which may be brought into a position of engagement with a holder-on portion 28 on the clamping jaw 4. The external parts of the clamping jaws 4 and 5 are bent in a direction towards one another in such a manner that the clamping jaws partly enclose the roof-rack rail 1 on the lower face thereof in the active, i.e. the tightened position. In the position in Fig. 3, the load-carrier tube 2 together with the accompanying support foot 4 - 6 may be passed downwards across the roof-rack rail 1. In Fig. 3, the support foot rests via the protective means 24 against the roof-rack rail with the aid of a support edge 28 consisting of downwardly angled lateral flanges on the support 8, most clearly apparent from Figs. 7 and 8. By turning the hand wheel 23 to actuate the spindle 22, the clamping jaws 4 and 5 are clamped about the roof-rack rail 1 owing to the pivotal movement of the clamping jaw 5 about the pivot formed by the bar 17 in the support 8, to the position illustrated in Fig. 1. In case the device is to be clamped about a means having smaller dimensions than the roof-rack rail 1, the projection 16 of the clamping jaw 5 may be inserted through the second slit 18. Because a spindle 22 is positioned towards the top of the support foot it need not be untightened as the load-carrier is lifted off or applied onto the vehicle. Upon tightening of the actuating means which extends obliquely relatively to the slide face 11, the clamping block 12 attempts to slide along said face into secure abutment against the lower face of the support tube 2. Thus, tightening of the support foot against the support rail 2 is effected at the same time as the support foot is being tightened about the roof-rack rail 1. By pivoting the hood 25 upwards and locking the latter, unauthorised access to the actuating means via the hand wheel 23 is prevented, thus preventing unauthorised dismantling of the load-carrier. The clamping force between the clamping block 12 and the load-carrier hood may be varied by suitable choice of the size of the acute angle formed between the clamping jaw slide path portion 11 and the bottom face of the load-carrier rod as well as of the oblique position of the actuating means 6 relatively to the slide face.

The invention is not limited to the embodiment described in the aforegoing and illustrated by way of example in the drawing figures but could be varied as to its details within the scope of the appended claims without departing from the basic idea of the invention. In the embodiment shown the clamping jaws and the clamping block engage in the interior of the load-carrier bar 2. However, the invention could be used equally well also without this kind of engagement. For instance, the clamping legs could be provided with portions which are arranged to instead have a grip engagement with the load-carrier rod 2. The load-carrier need not necessarily be a rod but could be any kind of suitable member carried by support feet.

## Claims

1. A device for a vehicle-mounted load-carrier comprising support feet carrying said carrier on top of a vehicle structure (1) and being of the kind, wherein each support foot comprises an actuating means (6), the actuating force of which causes the support foot to be clamped simultaneously to the vehicle structure (1) and to the load-carrier (2), said actuating means (6) being a traction means acting between two clamping jaws (4, 5) arranged to move towards one another and thus to exert a clamping force against opposite sides of an integral element of the vehicle structure, characterised in that one (4) of said clamping jaws being formed with a slide face (11) forming an acute angle with a neighbouring part of the load-carrier (2), a clamping block (12) resting on said slide face for displacement thereon, the force of said traction means (6) being exerted on said clamping block at an oblique angle relatively to the slide plane in order to, upon tightening of the clamping jaws about said part of the vehicle carrying structure, at the same time cause said clamping block to be displaced along said slide face, into abutment against the load-carrier and thus participating in said clamping of the support foot to the load carrier.

2. A device as claimed in claimed in claim 1, primarily intended for mounting on a roof-rack rail being part of the vehicle structure, **characterised** in that the clamping jaw (4) which is formed with the slide face (11) on which said clamping block (12) is arranged to slide, is formed with a support side (8) extending along the lower face of the load-carrier and from which support side projects at least one projecting guide means (9, 10), a widened end portion of which grippingly engages inteiriorly of the edges of an opening (3) formed in the bottom face of the load-carrier (2).

3. A device as claimed in claim 1 and 2, **characterised** in that the actuating means (6) consists of a screw spindle (22) including a stop means bearing upon the clamping block (12).

4. A device as claimed in claim 2, **characterised** in that the second one of said clamping jaws comprises a projection (16) extending through openings formed in said support side (8) and possibly also in said load carrier (2).

5. A device as claimed in any one of the preceding claims, **characterised** in that the load-carrier consists of carrier rail (2) formed on its bottom face with slits, the support foot being unlosably mounted on said rail for sliding displacement thereon for adjustment of the spacing between the support feet provided on the carrier rail (2) to the vehicle structure, e.g. the spacing between two rack rail bars (1) .

6. A device as claimed in claim 4, **characterised** in that the second clamping jaw (5) rests against the corresponding edge formed in the opening in the support side (8), for pivotal movement.

7. A device as claimed in any one of the preceding claims, **characterised** in that the ends of the clamping jaws (4, 5) opposite the load-carrier (2) extend at an angle towards one another to efficiently grip a rod-like member (1) of the vehicle structure, such as a rack rail.

8. A device as claimed in any one of the preceding claims, **characterised** in that the actuating means (6) is a threaded traction bar (22) extending between the clamping jaws (4, 5) closely adjacent-the support side (8) of the support foot, thus leaving a free space between the clamping jaw end portions for insertion of components (1) forming part of the vehicle structure.

## Patentansprüche

1. Vorrichtung für einen an einem Fahrzeug montierten Lastträger, der oben auf einer Fahrzeugstruktur (1) angeordnet ist und tragende Stützfüße aufweist und jener Art ist, bei der jeder Stützfuß ein Betätigungsmittel (6) umfaßt, dessen Betätigungskraft bewirkt, daß der Stützfuß gleichzeitig an der Fahrzeugstruktur (1) und am Lastträger (2) geklemmt wird, wobei das Betätigungsmittel (6) ein zwischen zwei Spannbacken (4, 5) wirkendes Zugmittel ist und die Spannbacken so angeordnet sind, daß sie sich aufeinander zu bewegen und somit gegen einander gegenüberliegende Seiten eines integralen Elements der Fahrzeugstruktur eine Klemmkraft ausüben, dadurch gekennzeichnet, daß eine (4) der Spannbacken mit einer Gleitfläche (11) ausgebildet ist, die mit einem benachbarten Teil des Lastträgers (2) einen spitzen Winkel bildet, wobei ein Spannblock (12) an der Gleitfläche zur Bewegung daran anliegt und wobei die Kraft des Zugmittels (6) in einem schrägen Winkel bezüglich der Gleitebene auf den Spannblock ausgeübt wird, um bei Festziehen der Spannbacken an dem Teil der Fahrzeugtragstruktur gleichzeitig eine Verschiebung des Spannblocks entlang der Gleitfläche zum Anstoß an den Lastträger zu bewirken und somit am Festklemmen des Stützfußes am Lastträger teilzunehmen.

2. Vorrichtung nach Anspruch 1, in erster Linie zur Befestigung an einer einen Teil der Fahrzeugstruktur bildenden Dachgepäckträgerschiene, dadurch gekennzeichnet, daß die Spannbacke (4), die mit der Gleitfläche (11) ausgebildet ist, an der der Spannblock (12) gleiten kann, mit einer Stützseite (8) ausgebildet ist, die sich entlang der unteren Fläche des Lastträgers erstreckt und von der mindestens ein vorragendes Führungsmittel (9, 10) wegragt, von dem ein verbreiterter Endteil innerhalb der Ränder einer in der Unterseite des Lastträgers (2) ausgebildeten Öffnung (3) in Greifeingriff steht.

3. Vorrichtung nach Anspruch 1 und 2, dadurch gekennzeichnet, daß das Betätigungsmittel (6) aus einer Schraubenspindel (22) besteht, die ein am Spannblock (12) anliegendes Anschlagmittel enthält.

4. Vorrichtung nach Anspruch 2, dadurch gekennzeichnet, daß die zweite der Spannbacken einen durch in der Stützseite (8) und möglicherweise auch im Lastträger (2) ausgebildete Öffnungen ragenden Vorsprung (16) umfaßt.

5. Vorrichtung nach einem der vorhergehenden Ansprüche, dadurch gekennzeichnet, daß der Lastträger aus einer Trägerschiene (2) besteht, in deren Unterseite Schlitze ausgebildet sind, wobei der Stützfuß an der Schiene zur Ausführung einer Gleitbewegung daran zur Einstellung des Abstands zwischen den an der Trägerschiene (2) vorgesehenen Stützfüßen und der Fahrzeugstruktur, zum Beispiel des Abstands zwischen zwei Gepäckträgerschienenstäben (1), unverlierbar montiert ist.

6. Vorrichtung nach Anspruch 4, dadurch gekennzeichnet, daß die zweite Spannbacke (5) zur Ausführung einer Schwenkbewegung an dem in der Öffnung in der Stützseite (8) gebildeten entsprechenden Rand anliegt.

7. Vorrichtung nach einem der vorhergehenden Ansprüche, dadurch gekennzeichnet, daß sich die Enden der Spannbacken (4, 5) gegenüber dem Lastträger (2) in einem Winkel zueinander erstrecken, um ein stangenähnliches Glied (1) der Fahrzeugstruktur, wie zum Beispiel eine Gepäckträgerschiene, wirksam zu greifen.

8. Vorrichtung nach einem der vorhergehenden Ansprüche, dadurch gekennzeichnet, daß das Betätigungsmittel (6) ein Gewinde-Zugstab (22) ist, der sich zwischen den Spannbacken (4, 5) dicht neben der Stützseite (8) des Stützfußes erstreckt und somit zwischen den Spannbackenendteilen einen Freiraum zur Einführung von einen Teil der Fahrzeugstruktur bildenden Komponenten (1) läßt.

## Revendications

1. Dispositif pour un support de charge monté sur un véhicule comprenant des pieds de support portant ledit support par-dessus une structure de véhicule (1) et étant du type dans lequel chaque pied de support comprend un moyen d'entraînement (6) dont la force d'entraînement fait en sorte de serrer le pied de support de manière simultanée à la structure (1) du véhicule et au support de charge (2), ledit moyen d'entraînement (6) étant un moyen de traction agissant entre deux mâchoires de serrage (4, 5) arrangées pour se déplacer en direction l'une de l'autre pour ainsi exercer une force de serrage sur les côtés opposés d'un élément solidaire de la structure du véhicule, caractérisé en ce qu'une desdites mâchoires de serrage (4) est munie d'une face de glissement (11) formant un angle aigu avec une partie voisine du support de charge (2), un bloc de serrage (12) s'appuyant sur ladite face de glissement afin de s'y déplacer, la force dudit moyen de traction (6) s'exerçant sur ledit bloc de serrage en formant un angle oblique par rapport au plan de glissement pour faire en sorte, lorsqu'on serre les mâchoires de serrage autour de ladite partie de la structure de support du véhicule, de déplacer en même temps ledit bloc de serrage le long de ladite face de glissement jusqu'à ce qu'il vienne buter contre le support de charge en participant ainsi audit serrage du pied de support avec le support de charge.

2. Dispositif selon la revendication 1, destiné principalement à être monté sur une barre de porte-bagages faisant partie de la structure du véhicule, caractérisé en ce que la mâchoire de serrage (4), qui est munie de la face de glissement (11) sur laquelle ledit bloc de serrage (12) est arrangé pour glisser, est munie d'un côté de support (8) s'étendant le long de la face inférieure du support de charge, au moins un moyen de guidage (9, 10) faisant saillie par rapport audit côté de support, dont une portion terminale élargie vient s'insérer par serrage à l'intérieur des bords d'une ouverture (3) pratiquée dans la face inférieure du support de charge (2).

3. Dispositif selon les revendications 1 et 2, caractérisé en ce que le moyen d'entraînement (6) est constitué d'une tige filetée (22) englobant un moyen d'arrêt s'appuyant sur le bloc de serrage (12).

4. Dispositif selon la revendication 2, caractérisé en ce que la deuxième mâchoire de serrage comprend une saillie (16) s'étendant à travers des ouvertures pratiquées dans ledit côté de support (8) et le cas échéant également dans ledit support de charge (2).

5. Dispositif selon l'une quelconque des revendications précédentes, caractérisé en ce que le support de charge est constitué d'une barre de support (2) munie de fentes sur sa face inférieure, le pied de support étant monté de manière inamovible sur ladite barre afin de s'y déplacer par glissement afin de régler l'écartement entre les pieds de support prévus sur la barre du support (2) par rapport à la structure du véhicule, c'est-à-dire l'écartement entre les deux barres du porte-bagages.

6. Dispositif selon la revendication 4, caractérisé en ce que la deuxième mâchoire de serrage (5) s'appuie sur le bord correspondant formé dans l'ouverture pratiquée dans le côté de support (8) à des fins de pivotement.

7. Dispositif selon l'une quelconque des revendications précédentes, caractérisé en ce que les extrémités des mâchoires de serrage (4, 5) opposées au support de charge (2) s'étendent en formant un angle l'une par rapport à l'autre dans le but de saisir de manière efficace un élément (1) en forme de tige de la structure du véhicule, tel qu'une barre d'un porte-bagages.

8. Dispositif selon l'une quelconque des revendications précédentes, caractérisé en ce que le moyen d'entraînement (6) est une barre de traction filetée (22) s'étendant entre les mâchoires de serrage (4, 5) en position étroitement adjacente au côté de support (8) du pied de support, en laissant ainsi un espace libre entre les portions terminales des mâchoires de serrage pour l'insertion de composants (1) faisant partie de la structure du véhicule.
